# EUROPEAN PATENT SPECIFICATION

(11) **EP 1 765 890 B1**
(45) Date of publication and mention of the grant of the patent: **07.01.2009**
(21) Application number: 05733879.0
(22) Date of filing: 28.04.2005
(51) Int. Cl.: C08F 210/00

(54) **A PROCESS FOR THE PREPARATION OF AN ETHYLENE COPOLYMER**
VERFAHREN ZUR HERSTELLUNG EINES ETHYLENCOPOLYMERS
PROCEDE DE PREPARATION D'UN COPOLYMERE ETHYLENIQUE

(30) Priority: 17.05.2004 EP 04076446
(43) Date of publication of application: 28.03.2007
(73) Proprietor: Saudi Basic Industries Corporation, Riyadh 11422 (SA)
(72) Inventor: NOOIJEN, Godefridus, Arnoldus, Henricus, NL-5981 CA Panningen (NL); MEIJERS, Ramon, Hubertus, Anna, Maria, NL-6444 EA Brunssum (NL); MCCARTHY, Mary, NL-6212 CR Maastricht (NL); VAN KESSEL, Matthijs, NL-6438 JG Oirsbeek (NL)
(74) Representative: Bootsma, Jan P.C.
(86) International application number: PCT/EP2005/004640
(87) International publication number: WO 2005/111098

(56) References cited:
- EP-A- 0 848 021
- EP-A- 0 909 769
- US-A- 5 274 056
- US-A- 5 527 867
- US-B1- 6 174 981
- US-B1- 6 201 077
- US-B1- 6 204 346
- US-B2- 6 465 586

## Description

The present invention relates to a process for the preparation of an ethylene copolymer by polymerizing ethylene and at least one alpha-olefin in the presence of a chromium-containing catalyst and a diluent.

A polymerization process for the preparation of polyethylene at relatively low pressures takes place in the presence of a catalyst. The selection of the catalyst is very important because different catalyst systems, such as a Ziegler-Natta catalyst system or a chromium catalyst based system, result in different molecular weight distributions and in different physical properties, in particular mechanical properties, of a polyethylene resin.

For a light diluent slurry production of high or medium density polyethylene, chromium-containing catalyst systems are often applied. There is an ongoing need to develop improved chromium-containing catalyst systems to produce polyethylene resins having desired mechanical and processing properties. Another catalyst system for the production of polyethylene is the Ziegler/Natta polymerization catalyst system. A person skilled in the art will consider the two catalyst systems as being completely different. For example, in contrast to a Ziegler-Natta catalyst system, a chromium-containing catalyst system is generally applied in the absence of an alkyl-containing promoter (and can hence be referred to as "neat chromium-containing catalyst"). The relatively high bulk density of the polyethylene powder produced with this catalyst system is a very advantageous feature because the higher the bulk density (poured), the more polyethylene fits into a specific volume, such as the volume of the reactor or the means of transport.

One of the methods to meet the ongoing need to optimize and to improve the production of polyethylene in order to decrease the cost of production and to improve the competitiveness of the polymerization process is the use of the combination of a chromium-containing catalyst and an alkyl-containing promoter, for example an alkyl-containing compound of aluminium, magnesium, boron or zinc. By using said combination the activity of the catalyst is strongly enhanced and mechanical and processing properties of the polyethylene are improved and can be controlled by varying the amount of promoter.

However, the presence of an alkyl-containing promoter generally results in a polymer powder having a relatively low bulk density. This is an important drawback because a low bulk density reduces the production capacity.

It is the object of the present invention to provide a process for the preparation of an ethylene polymer by polymerizing ethylene and at least one alpha-olefin in the presence of a chromium-containing catalyst, an alkyl-containing promoter and a diluent resulting in a polymer powder having a high bulk density.

The present invention is characterized in that in a first step of the polymerization ethylene and/or propylene and optionally at least one alpha-olefin comprising 3 to 12 carbon atoms are polymerized with a chromium containing catalyst on a silica or an alumina support in an inert diluent and in the absence of an alkyl-containing promoter and after 2-650 grams of polymer per gram of catalyst have been produced in said first step the polymerization of ethylene and alpha-olefin takes place in a second step in the presence of an alkyl-containing promoter.

The two step slurry process according to the invention results in a polymer powder having a bulk density (measured according to ISO R60) being substantially higher than the bulk density of the polymer powder produced with a neat chromium-containing catalyst.

Furthermore, the polymer obtained with the process according to the present invention has excellent mechanical and processing properties. Besides the improved bulk density other desirable properties such as a narrowed average particle size distribution of the polyethylene powder (SPAN) and a decreased amount of fines are obtained.

According to a preferred embodiment of the invention an alkyl-containing promoter is added after 2- 600 grams of polymer per gram of catalyst have been produced in a first step of the polymerization.

According to a further preferred embodiment of the invention an alkyl-containing promoter is added after 2-100 grams of polymer per gram of catalyst have been produced in a first step of the polymerization.

In the first step of the process according to the invention the polymerization of ethylene and/or propylene and optionally at least one alpha-olefin comprising 3 to 12 carbon atoms is carried out in an inert diluent in the absence of an alkyl-containing promoter.

The alpha-olefin comprising 3 to 12 carbon atoms may be for example propylene, 1-butene, 1-pentene, 1-hexene and/or 1-octene.

The polymerization must be carried out under slurry conditions, that is, under polymerization reaction conditions wherein the reactor temperature is kept below the temperature at which the polymer goes into solution.

The mole fraction of ethylene ranges between for example 90 and 100% and the mole fraction of alpha-olefin comprising 3 to 12 carbon atoms ranges between for example 0 and10%.

Preferably, the alpha-olefin is 1-butene and/or 1-hexene.

Suitable inert diluents include for example pentane, hexane, propane, heptane and isobutane.

Preferably, the inert diluent is isobutane.

The polymerization process in the first step may be carried out at a temperature between 25°C and110°C and more preferably between 80°C and 105°C.

The polymerization process in the first step may be carried out in the presence of hydrogen. Generally the concentration of hydrogen in the diluent is less than 3.5 mol%.

The ethylene concentration in the diluent may range between 0.1 and 20 mole% arid preferably between 1 and 14 mole%.

The chromium-containing catalyst contains a silica or an alumina support. The support may be modified by cogels such as silica-titania or silica-alumina and by replacing silica with alumina or amorphous aluminium phosphates. Furthermore, the support may comprise a tergel which is produced by mixing a chromium source with the silica and titania compound. The chromium-containing catalyst may also be doped with a chemical compound containing for example aluminium, titanium, phosphorus, boron or fluorine by impregnation of the porous chromium containing supports with a solution of these compounds.

Preferably, the chromium-containing catalyst is on a silica support.

The silica support may have a large surface area (SA ), typically larger than 200 m/g, and a large pore volume (PV), typically larger than 0.8 cm³/g. Preferably the support has a pore volume of at least 1.0 cm³/g. Preferably the specific surface is at least 200 m/g. These properties of the support, pore volume and specific surface, are determined before the catalyst is activated at an elevated temperature. The specific surface area (SA) is inm/gram and is determined using the so-called BET method and the pore volume (PV) is in cm / gram and is determined with nitrogen capillary condensation. (Recommendations IUPAC 1991; Pure and App. Chem., Vol. 63,9, 1227-1246. ) The properties of the catalyst, pore volume and specific surface are determined before the catalyst is activated at an elevated temperature.

The amount of chromium in the catalyst in the first step is generally at least 0.2% by weight and preferably at least 0.8 wt%.

Preferably, the average particle size (D₅₀) of the catalyst is between 30 and 150 micrometers. Generally the catalyst is activated before being applied in the polymerization reaction. The activation may take place under different conditions. The activation generally takes place at an elevated temperature, for example, at a temperature above 450°C.

The activation may take place in different atmospheres, for example in dry air.

Preferably, the activation takes place at least partially under an inert atmosphere such as nitrogen. At the same time the temperature is raised slowly. It has been found to be advantageous to change over from the nitrogen atmosphere to an atmosphere of dry air at a temperature of at most 700°C.

According to a preferred embodiment of the invention the polymerization of ethylene is carried out in the first step in isobutane with the chromium catalyst at a temperature between 80°C and105°C, the ethylene concentration in the diluent being between 1 and 14 mole% and the polymerization being continued until the polymerization degree is 2-600 grams of polymer per gram of catalyst.

According to a further preferred embodiment of the invention the polymerization of ethylene is carried out in the first step in isobutane with the chromium catalyst at a temperature between 80°C and105°C, the ethylene concentration in the diluent being between 1 and 5 mole% and the polymerization being continued until the polymerization degree is 2-100 grams of polymer per gram of catalyst.

After the desired polymerization degree is reached in the first step, in a second step the polymerization of ethylene and alpha-olefin monomer is carried out in a diluent at a temperature between 85°C and 110°C in the presence of an alkyl-containing promoter.

The alpha-olefin may be an alpha-olefin comprising 3 to 12 carbon atoms, for example propylene, 1-butene, 1-pentene, 1-hexene and/or 1-octene.

The alpha-olefin may be added to the reactor in an amount of for example less than 1 mole% in the diluent.

Preferred alpha-olefins are 1-butene and 1-hexene.

Preferably the temperature is between 85°C and 107°C and more preferably between 90°C and 105°C.

In the second step the ethylene concentration in the diluent may range between 1 and 14 mole%.

Generally, the alkyl-containing promoter is an alkyl boron compound and preferably the alkyl boron compound is triethylboron.

The boron concentration in the polymerization reactor is at least 0.05 ppm boron based on the diluent.

Suitable diluents include, for example, isobutane and propane.

Preferably, the diluent is isobutane.

The polymerization in the second step may take place in the presence of hydrogen. The presence of hydrogen may affect several polymer properties, for example molecular weight and die-swell.

More preferably, the concentration range of hydrogen in the diluent is less than 3.5 mole%.

The pressure in the slurry polymerization process in the second step may range between 1 and 10 MPa.

The polymerization process according to the invention may take place in a single reactor as a batch process.

Preferably, the polymerization process takes place in two reactors in series as a continuous process. The first reactor may also be operated batchwise.

The ethylene copolymers obtained with the process according to the present invention may be extruded or blow molded into articles such as bottles, containers, fuel tanks and drums or extruded or blown into films.

The ethylene copolymers obtained with the process according to the invention may be combined with additives such as lubricants, fillers, stabilizers, antioxidants, compatibilizers and pigments. The additives may be used to stabilize the copolymers by, for example, additive packages including hindered phenols, phosphites, antistatics and stearates.

The present invention is directed to a two step slurry process wherein the first step of the polymerization takes place in the absence of an alkyl-containing promoter and in the second step of the polymerization (after the polymerization degree in the first step has reached a value of 2-650) the chromium catalyst is combined with an alkyl-containing promoter to polymerize ethylene and the alpha-olefin being added to the reactor and this process is clearly different in comparison with prior art references such as for example USA-6465586, US-A- 6174981, US-A- 6204346, US-A- 6201077, EP-A- 909769, US-A- 5527867 and US-A- 5274056210 which are directed to a one-step process.

The invention will be elucidated by means of the following non-restrictive examples.

### Example I

The poymerization of ethylene in the first step was executed in a five liter stainless steel reactor, which was heated to a temperature of 100°C and filled with 1385 grams of isobutane. The stirrer was switched on at a stirring rate of 1000 rpm. Ethylene was added to the reactor until the total amount of 14 mole% in the diluent was reached. A catalyst vessel was filled with 200 mgrams of catalyst (PQ Corporation; C34340 MS) which had been activated in dry air in a fluid bed for 4 hours at 550°C. The catalyst was metered into the reactor and the first step of the polymerization started.

The polymerization continued until a polymerization degree of 600 (120 grams PE resin / 200 mg catalyst) was reached. Isobutane was vented off and the product was collected.

The copolymerization in the second step was executed in a five-liter stainless steel reactor, which was heated to a temperature of 100°C and filled with 1385 grams of isobutane. The stirrer was switched on at a stirring rate of 1000 rpm. Ethylene, hexene and hydrogen were added until a total amount of 14.0, 0.2 and 1.8 mole%, respectively, was reached in the diluent.

Next triethylboron TEB (0.25 ppm B based on isobutane) was metered into the reactor followed by the addition of 120 grams of the product obtained in the first step.

The polymerization started and after 40 minutes a productivity of 2500 gPE/g pure catalyst had been reached. The ethylene supply was switched off and the slurry was dumped into a vessel where isobutane was vented off.

The bulk density (BD) of the polyethylene was 390 kg/m³.

The D₅₀ of the polymer was 800 um with a span (D₉₀-D_{10/}D₅₀) of 0.99.

### Comparative Example A.

A five-liter stainless steel reactor was heated to a temperature of 100 C and filled with 1385 grams of isobutane. The stirrer was switched on at a stirring rate of 1000 rpm. Ethylene and hydrogen were added until a total amount of 14 and 1.8 mole%, respectively, was reached in the diluent.

Next triethylboron TEB (0.25 ppm B based on isobutane) was metered into the reactor followed by 180 mgrams of catalyst (PQ; C34340MS) which had been activated in dry air in a fluid bed for 4 hours at 550°C. The polymerization started and after 40 minutes a productivity of 2500 g of polyethylene/g of catalyst had been reached. The ethylene supply was switched off and the slurry was dumped into a vessel where isobutane was vented off.

The bulk density of the polyethylene was 270 kg/ m³.

The D₅₀ of the polymer was 520 um with a span (D₉₀-D_{10/}D₅₀) of 1.4

Comparison of Comparative Example A and Example I shows that the bulk density of the polymer powder is much lower and the particle size distribution is much broader when the polymerization is executed without the first step according to the present invention.

### Comparative Example B

The polymerization was executed according to Comparative Example A, except that no TEB was added. This resulted in a polymer powder with a bulk density of 331 kg/m³ and a low activity.

Comparison of Comparative Example B and Example I shows that the bulk density of the polymer powder produced according to the invention in Example I is even higher than the bulk density of powder produced in a polymerization without TEB in Comparative Example B.

### Examples II-VI

Example I was repeated, except that in the first step the polymerization was continued until the polymerization degrees (PD) was 300, 200, 180, 95 and 40, respectively.

### Examples VII-VIII

Example I was repeated, except that in the first step the ethylene concentration was 7 and 4 mole%, respectively (in the diluent) and the polymerization was continued until a polymerization degree of 60 had been reached.

### Example IX

Example I was repeated, except that in the first step the ethylene concentration was 4-mole% (in the diluent) and the polymerization temperature was 90 °C. The polymerization reaction was continued until the polymerization degree was 60.

The above-described polymerizations were carried out until a productivity of 2500 (gPE/gCat) had been obtained.

The details of the Examples are summarized in Table 1.

**Table 1:**

| **First polymerization step** | | | | **Second polymerization step** | | | | | | | |
|---|---|---|---|---|---|---|---|---|---|---|---|
| **Example** | **C₂ conc.** | **Temp** | **Polymerization** | **TEB** | **C₂ conc.** | **H₂ conc.** | **Temp** | **Activity** | **BD** | **D50** | **SPAN** |
| | **(mole%)** | **(°C)** | **Degree (PD)** | **conc.** | **(mole%)** | **(mole%)** | **(°C)** | **(gPE/gCat/hr** | **(g/L)** | **(**µ**m)** | |
| I | 14 | 100 | 600 | 0.25 | 14 | 1.8 | 100 | 6627 | 390 | 800 | 0.99 |
| Comp. Ex. | | | | 0.25 | 14 | 1.8 | 100 | 3559 | 270 | 520 | 1.4 |
| Comp. Ex. | | | | - | 14 | 1.8 | 100 | 1431 | 331 | | |
| II | 14 | 100 | 300 | 0.25 | 14 | 1.8 | 100 | 5298 | 364 | 940 | 0.91 |
| III | 14 | 100 | 200 | 0.25 | 14 | 1.8 | 100 | 4719 | 335 | | |
| IV | 14 | 100 | 180 | 0.25 | 14 | 1.8 | 100 | 5371 | 325 | 780 | 0.98 |
| V | 14 | 100 | 95 | 0.25 | 14 | 1.8 | 100 | 4694 | 301 | 968 | 0.91 |
| VI | 14 | 100 | 40 | 0.25 | 14 | 1.8 | 100 | 4744 | 270 | 953 | 0.93 |
| VII | 7 | 100 | 60 | 0.25 | 14 | 1.8 | 100 | 5258 | 305 | 973 | 0.9 |
| VIII | 4 | 100 | 60 | 0.25 | 14 | 1.8 | 100 | 5920 | 320 | 1023 | 0.85 |
| IX | 4 | 90 | 60 | 0.25 | 14 | 1.8 | 100 | 3593 | 375 | 899 | 0.75 |

## Claims

1. A process for the preparation of an ethylene copolymer by polymerizing ethylene and at least one alpha-olefin in the presence of a chromium-containing catalyst and a diluent, **characterized in that** in the first step of the polymerization ethylene and/or propylene and optionally at least one alpha-olefin comprising 3 to 12 carbon atoms are polymerized with a chromium containing catalyst on a silica or an alumina support in an inert diluent in the absence of an alkyl-containing promoter and wherein in a second step, after 2-650 grams of polymer per gram of catalyst have been produced in the first step, the polymerization of ethylene and alpha-olefin takes place in the presence of an alkyl-containing promoter.

2. A process according to Claim 1 **characterized in that** an alkyl-containing promoter is added after 2-600 grams of polymer per gram of catalyst have been produced in the first step of the polymerization.

3. A process according to any one of Claims 1-2 **characterized in that** the alkyl containing promoter is an alkyl boron compound.

4. A process according to Claim 3 **characterized in that** the alkyl boron compound is triethylboron.

5. A process according to any one of Claims 1-4 **characterized in that** the diluent in the first step and in the second step is isobutane.

6. A process according to any one of Claims 1-5 **characterized in that** the alpha-olefin is 1-butene and/or 1-hexene.

7. A process according to any one of Claims 1-6 **characterized in that** the second step takes place in the presence of hydrogen.

8. A process according to any one of Claims 1-7 **characterized in that** the chromium-containing catalyst is on a silica support.

## Patentansprüche

1. Verfahren zur Herstellung eines Ethylen-Copolymers durch Polymerisation von Ethylen und mindestens einem alpha-Olefin in Gegenwart eines Chrom enthaltenden Katalysators und eines Verdünnungsmittels, **dadurch gekennzeichnet, daß** im ersten Schritt der Polymerisation Ethylen und/oder Propylen und gegebenenfalls mindestens ein alpha-Olefin mit 3 bis 12 Kohlenstoffatomen mit einem Chrom enthaltenden Katalysator auf einem Siliciumoxid- oder Aluminiumoxidträger in einem inerten Verdünnungsmittel in Abwesenheit eines Alkylgruppen enthaltenden Promotors polymerisiert werden und in einem zweiten Schritt nach Herstellung von 2-650 Gramm Polymer pro Gramm Katalysator im ersten Schritt die Polymerisation von Ethylen und alpha-Olefin in Gegenwart eines Alkylgruppen enthaltenden Promotors stattfindet.

2. Verfahren nach Anspruch 1, **dadurch gekennzeichnet, daß** nach Herstellung von 2-600 Gramm Polymer pro Gramm Katalysator im ersten Schritt der Polymerisation ein Alkylgruppen enthaltender Promotor zugesetzt wird.

3. Verfahren nach einem der Ansprüche 1-2, **dadurch gekennzeichnet, daß** es sich bei dem Alkylgruppen enthaltenden Promotor um eine Alkylborverbindung handelt.

4. Verfahren nach Anspruch 3, **dadurch gekennzeichnet, daß** es sich bei der Alkylborverbindung um Triethylbor handelt.

5. Verfahren nach einem der Ansprüche 1-4, **dadurch gekennzeichnet, daß** es sich bei dem Verdünnungsmittel im ersten Schritt und im zweiten Schritt um Isobutan handelt.

6. Verfahren nach einem der Ansprüche 1-5, **dadurch gekennzeichnet, daß** es sich bei dem alpha-Olefin um 1-Buten und/oder 1-Hexen handelt.

7. Verfahren nach einem der Ansprüche 1-6, **dadurch gekennzeichnet, daß** der zweite Schritt in Gegenwart von Wasserstoff stattfindet.

8. Verfahren nach einem der Ansprüche 1-7, **dadurch gekennzeichnet, daß** der Chrom enthaltende Katalysator auf einem Siliciumoxidträger vorliegt.

## Revendications

1. Procédé pour la préparation d'un copolymère de l'éthylène en polymérisant de l'éthylène et au moins une alpha-oléfine en présence d'un catalyseur contenant du chrome et d'un diluant, **caractérisé en ce que** dans la première étape de la polymérisation de l'éthylène et/ou du propylène et facultativement au moins une alpha-oléfine comprenant 3 à 12 atomes de carbone sont polymérisés avec un catalyseur contenant du chrome sur un support de silice ou d'alumine dans un diluant inerte en l'absence d'un promoteur alkylé et dans lequel dans une seconde étape, après avoir produit 2-650 grammes de polymère par gramme de catalyseur dans la première étape, la polymérisation de l'éthylène et de l'alpha-oléfine a lieu en présence d'un promoteur alkylé.

2. Procédé selon la revendication 1, **caractérisé en ce qu'**on ajoute un promoteur alkylé après avoir produit 2-600 grammes de polymère par gramme de catalyseur dans la première étape de la polymérisation.

3. Procédé selon l'une quelconque des revendications 1-2, **caractérisé en ce que** le promoteur alkylé est un composé alkylique du bore.

4. Procédé selon la revendication 3, **caractérisé en ce que** le composé alkylique du bore est le triéthylborane.

5. Procédé selon l'une quelconque des revendications 1-4, **caractérisé en ce que** le diluant dans la première étape et dans la seconde étape est l'isobutane.

6. Procédé selon l'une quelconque des revendications 1-5, **caractérisé en ce que** l'alpha-oléfine est le 1-butène et/ou le 1-hexène.

7. Procédé selon l'une quelconque des revendications 1-6, **caractérisé en ce que** la seconde étape a lieu en présence d'hydrogène.

8. Procédé selon l'une quelconque des revendications 1-7, **caractérisé en ce que** le catalyseur contenant du chrome est sur un support de silice.
